# EUROPEAN PATENT SPECIFICATION

(11) **EP 1 489 050 B1**
(45) Date of publication and mention of the grant of the patent: **01.01.2014**
(21) Application number: 01982764.1
(22) Date of filing: 12.11.2001
(51) Int. Cl.: C02F 3/06

(54) **DEVICE FOR PURIFYING WATER**
VORRICHTUNG ZUR REINIGUNG VON WASSER
DISPOSITIF DE PURIFICATION D'EAU

(43) Date of publication of application: 22.12.2004
(73) Proprietor: Takada, Shunsuke, Meguro-ku, Tokyo 152-0022 (JP)
(72) Inventor: Takada, Shunsuke, Tokyo 152-0022 (JP)
(74) Representative: Schöniger, Franz-Josef
(86) International application number: PCT/JP2001/009886
(87) International publication number: WO 2003/042118

(56) References cited:
- JP-A- 5 245 496
- JP-A- 6 320 182
- JP-A- 7 144 198
- JP-A- 9 066 293
- JP-A- 54 142 865
- US-A- 3 994 802
- US-A- 4 374 730
- US-B1- 6 297 033
- PATENT ABSTRACTS OF JAPAN vol. 004, no. 006 (M-088), 18 January 1980 (1980-01-18) & JP 54 142865 A (KUBOTA LTD), 7 November 1979 (1979-11-07)

## Description

### FIELD OF THE INVENTION

The present invention relates to a water purifying apparatus used therefor and, particularly, to a water purifying apparatus capable of increasing purifying efficiency and facilitating maintenance by use of an elongated, closed water channel.

### BACKGROUND OF THE INVENTION

A conventional basic system for purifying sewage or water in a fish tank or the like generally includes the following steps: first, physically removing solid matters through a screen (filter); second, decomposing ammonia generated in the organic matter which is a main source into nitrous acid, and then converting a nitrate by oxidizing (or nitrifying) the ammonia using aerobic bacteria such as active sludge

In addition, nitrification of ammonia only is insufficient for purifying water, because nitrate generated in water increases acidity of the water, and causes eutrophication. Accordingly, as a third step, it has been attempted to remove (denitrify) the nitrate, more specifically, convert the nitrate into a nitrogen gas by action of anaerobic bacteria, thereby more completely to purify the water.

Document US 6 297 033 discloses a system for nitrate removal from aquariums, both fresh water and marine aquariums, by means of permeable polymeric beads which contain a combination of fermentative and denitrifying bacteria and a carbon source. Preferred beads are beads made from sodium alginate or chitosan. The bacteria, in the presence of the carbon source, are able to reduce nitrate to nitrogen gas. Bacteria which are not harmful to fish are used. The beads-containing vessel is placed on-line with any commercially available aerobic biofilter and thus there is no need for an additional pump.

However, in the nitrification step using aerobic bacteria, a large amount of oxygen must be supplied to activate the aerobic bacteria. In some cases, this oxygen must be provided by using fluidizing or stirring means. On the other hand, the denitrification step using anaerobic bacteria should be carried out without oxygen, for example, by sealing a denitrification tank or by temporarily stopping the water flow.

It is very difficult to continuously establish these inconsistent conditions of nitrification and denitrification in the same equipment. This has limited practical use miniaturization of the conventional water purifying apparatus.

### SUMMARY OF THE INVENTION

The present invention provides an apparatus suitable to perform a method which comprises propagating, at the former state of an elongated, closed water channel, aerobic bacteria for realizing nitrification, and then disposing, at a later stage by which point oxygen is almost consumed by the aerobic bacteria, nutrition source which activates propagation of anaerobic bacteria. By this method, the water flowing through the apparatus will nitrify and then denitrify a specific amount of water successively flowing in the same water channel.

The use of the elongated water channel makes it possible to prevent a so-called "channel phenomenon" in which water flows only through a specific portion of a filter material, thereby help to use the entire filter medium. It also makes it possible to locate aerobic and anaerobic bacteria at different places in the same water channel, and thereby to obtain nearly perfectly purified water. Also, the method permits miniaturization of the apparatus.

### BRIEF DESCRIPTION OF DRAWINGS

FIG 1 is a view illustrating a basic principle of the present invention;
FIG. 2 is a view showing a structure of a cylinder body used as a water channel of the present invention,
FIG. 3 is a view showing an inner cylinder inserted in the cylinder body;
FIG. 4 is a graph showing a result obtained by an experiment using an apparatus of the present invention; and
FIG 5 is a graph showing another result obtained by the experiment using the apparatus of the present invention.

### DETAILED DESCRIPTION OF THE PREFERRED EMBODIMENTS

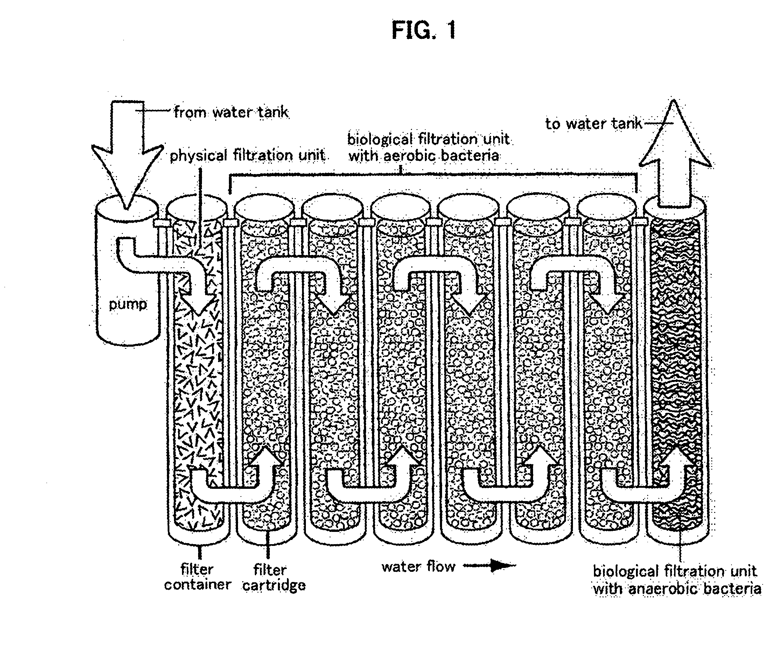

FIG 1 shows a most basic embodiment of the present invention.

Referring to FIG 1, water to be purified is pumped up from a water tank to be subjected to water purification as shown by an arrow "from water tank" at an upper left portion, and is supplied to cylindrical "filter vessels" positioned at a left end. A plurality (eight pieces in the figure) of cylindrical "filter vessels" are fluidly connected to each other with their upper and lower ends alternately. The water flows along a path shown by arrows to reach the "filter vessel" at a right end, and is then returned to the original water tank therefrom.

The eight "filter vessels" constitute an elongated, closed water channel as a whole.

The left end filter vessel constitutes a physical filtration portion for removing solid matter, and the subsequent six filter vessels constitute biofiltration portions using aerobic bacteria.

The right end filter vessel constitutes a biofiltration portion by anaerobic bacteria.

Where water to be purified has been supplied from the pump to the left end of the filter vessel, oxygen in an amount sufficient to propagate aerobic bacteria is contained, together with organic matter, in the water. However, as the water flows to the right side, the oxygen is consumed by the aerobic bacteria, and the oxygen content in the water is thereby reduced. Consequently, when the water reaches the right end filter zone, little oxygen remains in the water. The concentration of oxygen in water for allowing propagation of anaerobic bacteria is generally regarded as 2 mg/L or less. When the water reaches the right end filter vessel in the present invention, the concentration of oxygen in water nearly reaches 2 mg/L.

Until the water reaches the right end filter zone, the organic matter in the water to be purified is nitrified and a concentration of nitrate is correspondingly increased. The nitrate component thus generated, however, is denitrified by anaerobic bacteria in the right end filtration zone. The water is thus purified and is then returned to the water tank or source.

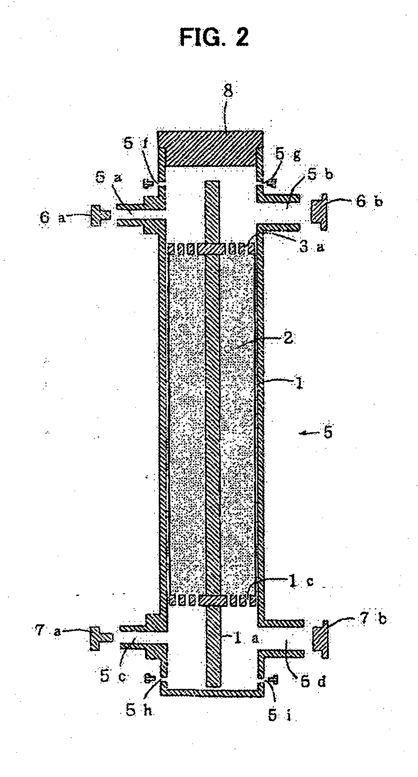

FIG 2 is a sectional view showing one example of an inner structure of each of cylinder shaped filter vessel.

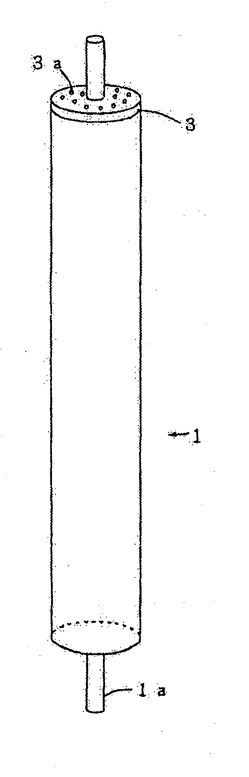

FIG 3 is a inner cylinder inserted in the cylinder shaped vessel shown in FIG 2 in which a filter material is inserted.

An inner cylinder 1 shown in FIG 3 is filled with a filter material 2 (FIG 2). A center shaft 1a of the inner cylinder 1 extends from upper and lower end portions of the inner cylinder 1. A lid 3 is fitted in the upper end portion of the inner cylinder 1. The lid 3 has a large number of small holes 3a through which water is allowed to pass after the inner cylinder 1 is filled with the filter material 2. Similarly, a bottom portion of the inner cylinder 1 has small holes 1c.

The inner cylinder 1 shown in FIG 3 is contained in a cylinder body 5 shown in FIG 2. The cylinder body 5 shown in FIG 2 has, at opposed side positions of the upper end, a pair of communication portions 5a and 5b with lids 6a and 6b. The cylinder body 5 also has, at opposed side portions of the lower end, a pair of communication portions 5c and 5d with lids 7a and 7d.

The communication portion 5b at the upper end of one cylindrical body 5 have a structure that can be fitted into the communication portion 5a at the upper end of the adjacent right side cylindrical body 5 (not shown). By fitting both the cylindrical bodies 5 to each other, a continuous water channel is formed between both the cylindrical bodies 5. Similarly, a water channel can be formed by connecting the opening 5d at the lower end of one cylindrical body 5 to the opening 5c at the lower end of the adjacent right side cylindrical body 5. The communication portions of both the cylindrical bodies 5 are not necessarily directly connected to each other, but may be indirectly connected to each other via a rubber or plastic pipe.

The communication portion 5d at the lower end of one cylindrical body 5 can be connected to the communication portion 5a at the upper end of the adjacent right side cylindrical body (not shown) by a pipe.

Small holes 5f, 5g, 5h, and 5i with lids may be formed in the side surface of the cylindrical body 5 at positions offset outwardly from the upper and lower communication portions 5a to 5d. These small holes 5f to 5i can be used as vent holes or drain holes, as needed.

For example, if existance of exceptional gas was recognized in cylindrical body 5, the gas can be removed by opening the lids of the upper small holes 5f and 5g. Likewise, precipitation can be removed by opening the lids of the lower small holes 5h and 5i.

In addition, by using the small holes, a part of water in one cylindrical body 5 located in the nitrification region of aerobic bacteria can be removed before the water flows to the cylindrical body of denitrification region of anaerobic bacteria. The part of water can be returned to the water tank and used for adjustment of water quality or propagation of anaerobic bacteria.

More particularly, if the total length of the cylindrical bodies forming the nitrification region is excessively short, or if the amount of water is excessively large, or if the amount of the filter materials is excessively small comparing to the amount of water, then the amount of oxygen remaining in water flowing into the anaerobic bacteria region becomes undesirably high. This may adversely affect propagation of anaerobic bacteria in the denitrification region. To remedy this, part of the water is removed before the water flows in the anaerobic bacteria region, while monitoring the water quality. In this case, the above-described small holes can be used as outlets to a bypass route.

The bottom portion of the cylindrical body 5 is closed. On the other hand, the top portion of the cylindrical body 5 is open for allowing insertion or removal of the inner cylinder, and is provided with a closable lid 8.

Since the cylindrical bodies 5, each of which contains the filter material 2, are configured as cartridge units under the same standard, it is possible not only to produce the cylindrical bodies 5 at low cost, but also to assemble a purifying apparatus having a required length from the cylindrical bodies 5 of a suitable number.

A purifying apparatus can be assembled from the cylindrical bodies 5 by arranging the cylindrical bodies 5 in parallel with their longitudinal directions directed in the vertical directions, alternately connecting the upper and lower communication portions 5a to 5d to each other, and closing the unnecessary communication portions with the lids. The purifying apparatus thus assembled has a long zigzag shaped water channel as shown by arrows in FIG 1 as a whole.

Another purifying apparatus having a long zigzag water channel similar to that described above can be fashioned by connecting the lower communication portion 5d of one cylindrical body 5 to the upper communication portion 5a of the adjacent right side of cylindrical body 5, in series.

A further purifying apparatus can be also obtained by preparing pre-assembled blocks, each of which is composed of a plurality of the cylindrical bodies 5, and connecting the pre-assembled blocks to each other.

In actual operation of the purifying apparatus, water to be purified is introduced in the communication portion 5a of the cylindrical body 5 at the leading end, and the inner cylinder 1 contained in the cylindrical body 5 is filled with a filter material suitable for physical filtration.

The cylindrical body 5 at the final stage is filled with a filter material suitable for propagation of anaerobic bacteria and the purified water is discharged from the communication portion 5b of the cylindrical body 5.

### Detailed Embodiment

A further embodiment in which the present invention is applied to a purifying apparatus used for a water tank for aquarium fishes will be hereinafter described.

In such an embodiment, the diameter of each cylindrical body 5 is set to about 3 cm and a length thereof is set to about 30 cm.

For a square shaped water tank having a width of 60 cm, which is generally called "Type 60," eight cylindrical bodies 5 are connected to each other. In this water tank, the effective total length is about 228 cm. For a water tank having a width of 120 cm, the cylindrical bodies 5 of eight pieces are further connected to those for the above square shaped water tank. In this case, the total length is about 456 cm.

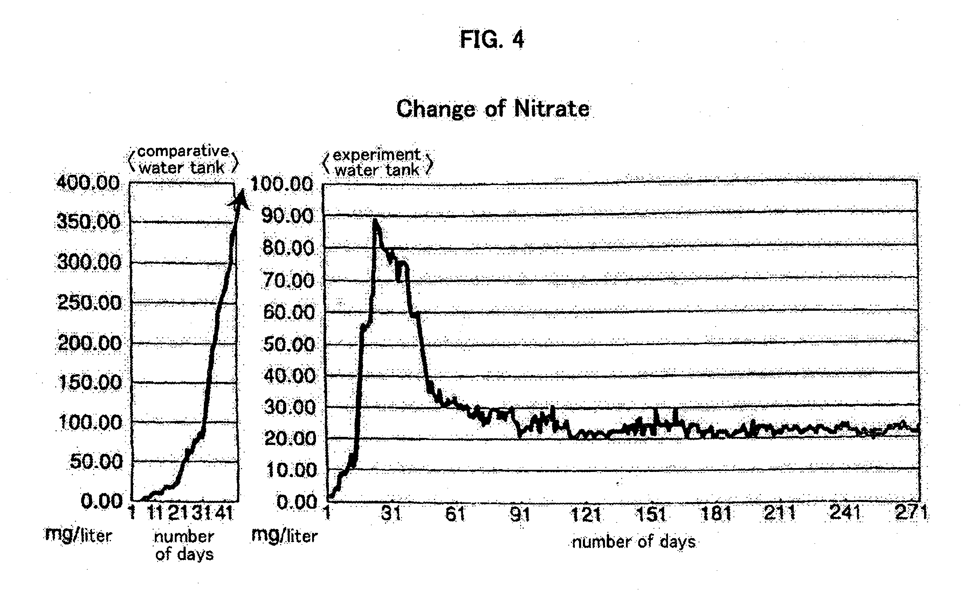

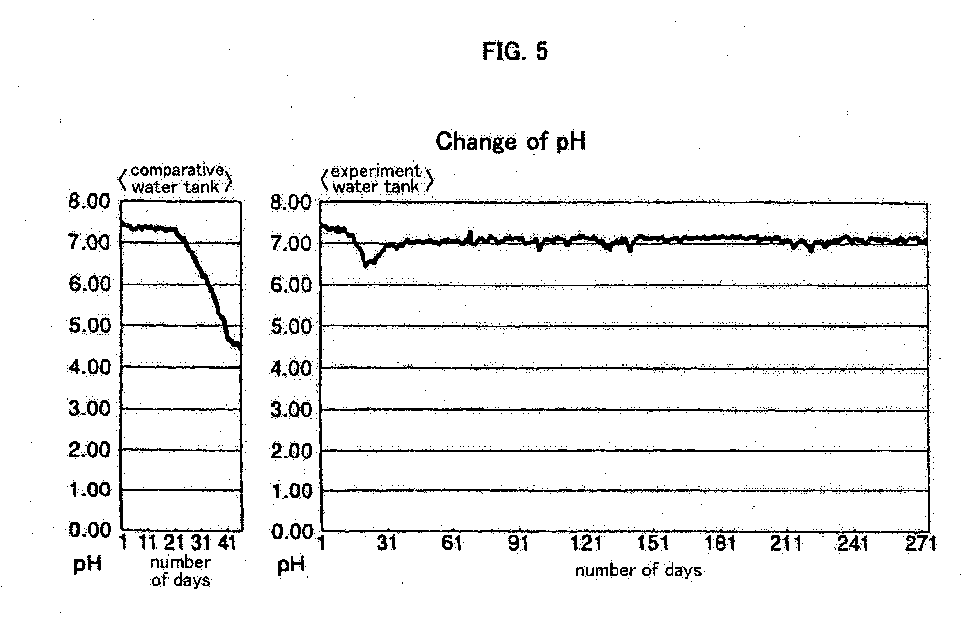

Results of an experiment carried out using the apparatus of the present invention for the Type 60 water tank with the most popular commercial purifying apparatus are shown in FIGS. 4 and 5 (Experimenter: Masamichi Tuji, assistant professor at Tokyo Institute of Technology). The experiments were carried out by preparing both the Type 60 water tanks, each of which was filled with the same amount of water adjusted to the same conditions, and putting 20 living angel fish in each of the water tanks.

The comparative water tank, used a filter Type 2426 filter sold by Eheim Company, and each of filter materials recommended by Eheim Company, Eheisubstrat 2.5 liter and Eheimek 1.5 liter. On the other hand, for the inventive apparatus, a sponge filter and a wool mat were used for physical filtration at the first stage; a Power House Type M 0.88 liter and Type S0.88 liter were used in the aerobic bacteria filtration region; and 100 g of Denny Ball (trade name) as an organic carbon agent were used for the anaerobic bacteria filtration region at the final stage.

Consequently, as shown in FIG. 4, in each of the water tanks, the concentration of nitrate in filtered water increased after an elapse of 15 to 18 days since the start of the experiment; whereas in the inventive apparatus, the concentration gradually decreased after an elapse of about 23 to 24 days and stayed at an approximately constant value after an elapse of 60 days. In the comparative water tank, the concentration further increased during the prolonged time period. With respect to a change in pH of the filtered water, in the inventive apparatus, as shown in FIG 5, the pH was nearly stable at 7.0, while in the comparative water tank, the pH continuously, rapidly decreased, to reach a value of 4.5 regarded as the living limit of angel fish, necessitating the discontinuation of the experiment after 42 days.

In the inventive apparatus, the angel fish continue to grow after an elapse of nine months. This means that the inventive apparatus does not require changing water, which is usually necessary in the case of usual breeding of aquarium fish. That is, the inventive apparatus eliminates the cumbersome change of water, which has been regarded as the major inconvenience in breeding aquarium fish.

In addition, the reason why the concentration of the nitrate in the inventive apparatus initially increased as in the comparative water tank and then decreased, is believed to be as follows: namely, in the initial stage, anaerobic bacteria is barely present in the water channel, but in the final stage, the propagation of anaerobic bacteria is promoted by creation of an anaerobic bacterial propagating environment and the action of the organic carbon, so that the function of the present invention starts in the final stage.

The above embodiment has been described by example of purification of water in a water tank for aquarium fish; however, the present invention is not limited thereto and may be applied to purification of sewage, human waste, river water, and the like. Depending on the quality of the water to be purified, the content of organic matter as a nutrient for propagating an aerobic bacteria may be initially small; however, the method and apparatus according to the present invention can be applied to any quality of water to be purified by adding an organic plastic material, an organic carbon material or the like as a nutrient for anaerobic bacteria in the filter material at the final stage.

### Industrial Applicability

As described above, the present invention provides an apparatus for producing a desirable environment for propagating anaerobic bacteria at the final stage of a water purification system by using an elongated, closed water channel, thereby continuously purifying water into a neutral state for a long-period of time by the denitrifying action of the anaerobic bacteria, and also provides an apparatus useful therefor.

The apparatus of the present invention in which cylindrical bodies are connected to each other to form a zigzag-shaped elongated water channel also keeps the channel phenomenon to a minimum, facilitating exchange of filter materials, and miniaturization of the apparatus.

## Claims

1. A water purifying apparatus comprising:
an elongated, closed water channel having an inlet for contaminated waste water, and an outlet for purified waste water;
the channel comprising an aerobic bacteria treatment zone adjacent the waste water inlet, and an anaerobic bacteria treatment zone adjacent the waste water outlet, wherein said elongated, closed water channel includes a plurality of cylindrical tubes (5) which are arranged with upper and lower end portions alternately connected to each other so as to form a zigzag shaped water channel,
**characterized in that** an inner cylinder (1) is contained in each of said cylindrical tubes, said inner cylinder being filled with a filter material.

2. A water purifying apparatus according to claim 1, wherein said inner cylinder (1) in an upper and lower end portion each has a lid (3) fitted, the lid having a plurality of holes for allowing water to pass through after said inner cylinder is filled with filter material.

3. A water purifying apparatus according to claim 1 or 2, wherein said inner cylinder (1) has a center shaft extending from upper and lower end portions of said inner cylinder.

4. A water purifying apparatus according to any of the preceding claims, wherein said cylindrical tube (5) is formed as a cylinder body.

5. A water purifying apparatus according to any of the preceding claims, wherein said cylindrical tube (5) is provided with a closable lid (8).

6. A water purifying apparatus according to any of the preceding claims, wherein said cylindrical tube (5) has, at opposite side portions of the upper end, a pair of upper communication portions (5a, 5b), and, at opposite side portions of the lower end, a pair of lower communication portions (5c, 5d).

7. A water purifying apparatus according to claim 6, wherein the upper communication portion (5b) of one cylindrical tube (5) has a structure that can be fitted into the communication portion (5a) of another cylindrical tube (5).

8. A water purifying apparatus according to claim 6 or 7, wherein the lower communication portion (5d) has a structure that can be fitted into the upper communication portion (5a) of another cylindrical tube (5).

9. A water purifying apparatus according to any of the preceding claims, wherein the upper communication portions (5a, 5b) and the lower communication portions (5c, 5d) each are provided with a lid (6a, 6b, 7a, 7b).

10. A water purifying apparatus according to any of the preceding claims, wherein small holes (5f, 5g, 5h, 5i) are formed in the side surface of the cylindrical tube (5) at positions offset outwardly from the upper and lower communication portions (5a, 5b, 5c, 5d), the small holes (5f, 5g, 5h, 5i) each being provided with a lid.

## Patentansprüche

1. Eine Wasserreinigungsvorrichtung, aufweisend:
Einen gestreckten, geschlossenen Wasserkanal mit einem Einlass für kontaminiertes Brauchwasser und einem Auslass für gereinigtes Brauchwasser;
wobei der Kanal eine aerobe Bakterienbehandlungszone neben dem Brauchwassereinlass und eine anaerobe Bakterienbehandlungszone neben dem Brauchwasserauslass aufweist,
wobei der gestreckte, geschlossene Wasserkanal eine Mehrzahl von zylindrischen Röhren (5) einschließt, die so angeordnet sind, dass obere und untere Endteile alternierend miteinander gebunden sind, so dass ein zickzackgeformter Wasserkanal gebildet wird,
**dadurch gekennzeichnet, dass**
ein innerer Zylinder (1) in jeder der zylindrischen Röhren enthalten ist, wobei der Zylinder mit einem Filtermaterial gefüllt ist.

2. Eine Wasserreinigungsvorrichtung nach Anspruch 1, wobei
der innere Zylinder (1) in einem unteren und einen oberen Endteil jeweils einen Deckel (3) angebracht hat wobei der Deckel eine Mehrzahl von Löchern aufweist, um Wasser zu erlauben, hindurch zu passieren, nachdem der innere Zylinder mit Filtermaterial gefüllt wird.

3. Eine Wasserreinigungsvorrichtung nach Anspruch 1 oder 2, wobei der innere Zylinder (1) einen zentralen Schaft aufweist, der sich von oberen und unteren Endteilen des inneren Zylinders erstreckt.

4. Eine Wasserreinigungsvorrichtung nach einem der vorhergehenden Ansprüche, wobei die zylindrische Röhre (5) als zylindrischer Körper geformt ist.

5. Eine Wasserreinigungsvorrichtung nach einem der vorhergehenden Ansprüche, wobei die zylindrische Röhre (5) mit einem verschließbaren Deckel (8) versehen ist.

6. Eine Wasserreinigungsvorrichtung nach einem der vorhergehenden Ansprüche, wobei die zylindrische Röhre (5) an gegenüberliegenden Seitenteilen des oberen Endes ein Paar von oberen Verbindungsteilen (5a, 5b) aufweist und an gegenüberliegenden Seitenteilen des unteren Endes ein Paar von Verbindungsteilen (5c, 5d) unteren aufweist.

7. Eine Wasserreinigungsvorrichtung nach Anspruch 6, wobei der obere Verbindungsteil (5b) einer zylindrischen Röhre eine Struktur aufweist, die an den Verbindungsteil einer anderen Röhre angepasst werden kann.

8. Eine Wasserreinigungsvorrichtung nach Anspruch 6 oder 7, wobei der untere Verbindungsteil (5d) einer zylindrischen Röhre eine Struktur aufweist, die an den oberen Verbindungsteil einer anderen Röhre (5) angepasst werden kann.

9. Eine Wasserreinigungsvorrichtung nach einem der vorhergehenden Ansprüche, wobei die oberen Verbindungsteile (5a, 5b) und die unteren Verbindungsteile (5c, 5d) jeweils mit einem Deckel (6a, 6b, 7a, 7b) versehen sind.

10. Eine Wasserreinigungsvorrichtung nach einem der vorhergehenden Ansprüche, wobei kleine Löcher (5f, 5g, 5h, 5i) in den Seitenoberflächen der zylindrischen Röhre (5) at Positionen angebracht sind, die von den oberen und unteren Verbindungsteilen (5a, 5b, 5c, 5d) nach außen versetzt sind, wobei die kleinen Löcher (5f, 5g, 5h, 5i) jeweils mit einem Deckel versehen sind.

## Revendications

1. Appareil de purification d'eau comprenant :
une conduite d'eau fermée allongée comportant une entrée pour les eaux usées contaminées et une sortie pour les eaux usées purifiées ;
la conduite comprenant une zone de traitement de bactéries aérobies adjacente à l'entrée d'eaux usées et une zone de traitement de bactéries anaérobies adjacente à la sortie d'eaux usées, ladite conduite d'eau fermée allongée comprenant une pluralité de tubes cylindriques (5) qui sont conçus avec des parties d'extrémité supérieure et inférieure raccordées de manière alternée les unes aux autres afin de former une conduite d'eau en zigzag,
**caractérisé en ce qu'**un cylindre interne (1) est contenu dans chacun desdits tubes cylindriques, ledit cylindre interne étant rempli d'un matériau filtrant.

2. Appareil de purification d'eau selon la revendication 1, dans lequel chaque dit cylindre interne (1) dans des parties d'extrémité supérieure et inférieure est équipé d'un couvercle (3), le couvercle possédant une pluralité de trous pour permettre à l'eau de traverser, une fois que ledit cylindre interne est rempli de matériau filtrant.

3. Appareil de purification d'eau selon la revendication 1 ou 2, dans lequel ledit cylindre interne (1) possède un arbre central s'étendant des parties d'extrémité supérieure et inférieure dudit cylindre interne.

4. Appareil de purification d'eau selon l'une quelconque des revendications précédentes, dans lequel ledit tube cylindrique (5) a la forme d'un corps de cylindre.

5. Appareil de purification d'eau selon l'une quelconque des revendications précédentes, dans lequel ledit tube cylindrique (5) est doté d'un couvercle refermable (8).

6. Appareil de purification d'eau selon l'une quelconque des revendications précédentes, dans lequel ledit tube cylindrique (5) comprend, au niveau des parties latérales opposées de l'extrémité supérieure, une paire de parties de communication supérieures (5a, 5b) et, au niveau des parties latérales opposées de l'extrémité inférieure, une paire de parties de communication inférieures (5c, 5d).

7. Appareil de purification d'eau selon la revendication 6, dans lequel la partie de communication supérieure (5b) d'un tube cylindrique (5) possède une structure qui peut être ajustée dans la partie de communication (5a) d'un autre tube cylindrique (5).

8. Appareil de purification d'eau selon la revendication 6 ou 7, dans lequel la partie de communication inférieure (5d) possède une structure qui peut être ajustée dans la partie de communication supérieure (5a) d'un autre tube cylindrique (5).

9. Appareil de purification d'eau selon l'une quelconque des revendications précédentes, dans lequel les parties de communication supérieures (5a, 5b) et les parties de communication inférieures (5c, 5d) sont chacune dotées d'un couvercle (6a, 6b, 7a, 7b).

10. Appareil de purification d'eau selon l'une quelconque des revendications précédentes, dans lequel de petits trous (5f, 5g, 5h, 5i) sont formés dans la surface latérale du tube cylindrique (5) à des positions décalées vers l'extérieur par rapport aux parties de communication supérieures et inférieures (5a, 5b, 5c, 5d), les petits trous (5f, 5g, 5h, 5i) étant chacun dotés d'un couvercle.
